# EUROPEAN PATENT SPECIFICATION

(11) **EP 4 578 692 B1**
(45) Date of publication and mention of the grant of the patent: **30.09.2026**
(21) Application number: 24193270.6
(22) Date of filing: 07.08.2024
(51) Int. Cl.: B60K 35/10, B60K 35/22, B60K 35/28, B60K 35/29, B60K 35/50, B60K 35/53, B60K 35/55

(54) **METHOD OF CHANGING COCKPIT LAYOUT ACCORDING TO DISPLAY MODE AND COCKPIT SYSTEM USING THE SAME**
VERFAHREN ZUR ÄNDERUNG DES COCKPITLAYOUTS GEMÄSS ANZEIGEMODUS UND COCKPITSYSTEM DAMIT
PROCÉDÉ DE CHANGEMENT DE DISPOSITION DE COCKPIT SELON UN MODE D'AFFICHAGE ET SYSTÈME DE COCKPIT L'UTILISANT

(30) Priority: 28.12.2023 KR 20230195051
(43) Date of publication of application: 02.07.2025
(73) Proprietor: Hyundai Mobis Co., Ltd., Gangnam-gu Seoul 06141 (KR)
(72) Inventor: KIM, Kyung Hoon, 13600 Seongnam-si (KR); LEE, Jun, 16902 Yongin-si (KR); AN, Hyun Jun, 15874 Gunpo-si (KR); LEE, Shin Jik, 18437 Hwaseong-si (KR)
(74) Representative: Vossius & Partner Patentanwälte Rechtsanwälte mbB

(56) References cited:
- DE-A1- 102018 212 445
- US-A1- 2016 193 923
- US-A1- 2019 344 664
- US-A1- 2023 302 906
- US-B2- 9 676 332

## Description

### BACKGROUND

### 1. Field

The following description relates to a display in a mobile device such as a vehicle or an uncrewed aerial vehicle (UAV), and more particularly, to a method of changing a cockpit layout according to a display mode and a cockpit system using the same.

### 2. Description of Related Art

As vehicles have become digital in recent years, many controllers are mounted in a vehicle, and various communication functions between the controllers allow the vehicle to be located remotely and discover a nearby charging station via the Internet or a smartphone. In addition, all information about the current state of the vehicle is checked in real time, such as battery charging or pre-conditioning, with a simple touch on a button. Further, an intelligent driving assistance system acquires information about road driving to build a driving environment more convenient for the driver.

In this regard, a cluster is used, which provides the basic functions of the vehicle, such as a driving speed, a mileage, an odometer, and an engine RPM dashboard. For example, the cluster provides charging infrastructure network information, a distance to empty (DTE), a current battery state, information output, and other accurate and convenient vehicle information required for a driving environment.

In particular, vehicles have recently used digital clustering of various digital cockpits to effectively represent vehicle information. Therefore, there is a need to develop a technique for handling these digital cockpits in an integrated manner.

Additionally, for recent vehicles, various display modes are required to provide use convenience to drivers and passengers, and there is a demand for a technique for changing a cockpit layout according to a display mode.

US 2016/193923 A1 relates to a vehicle including a display apparatus that is mounted in a vehicle to display information to a passenger.

DE 10 2018 212445 A1 relates to a display and/or control element for a motor vehicle.

Further related technologies are disclosed in US 2019/344664 A1, US 9 676 332 B2 and US 2023/302906 A1.

### SUMMARY

To address the above-mentioned problems, an aspect of the invention proposes a method of changing a cockpit layout according to a display mode, and a cockpit system using the same.

Specifically, an embodiment of the invention provides a front display which has one display panel including a plurality of display areas and which provides a dead front effect of, when at least one display area is deactivated, making the deactivated display area indistinguishable from the other display area.

Additionally, an embodiment of the invention proposes a low mode to secure a driver's forward vision, and a system for implementing a see-through display which may provide information to the driver and a passenger by transmitting light through a lower area of a front display even in the low mode.

Additionally, an embodiment of the invention provides a system for changing an interface of an activated display screen to match the size of an exposed screen in a low mode.

The objects to be achieved by the disclosure are not limited to the above-described technical objects, and those skilled in the art will clearly understand other unmentioned technical objects from the following description.

In an aspect of the invention, a cockpit system with a layout changed according to a display mode in a mobile device includes a front display disposed in front of a driver's seat and a passenger seat of the mobile device, a controller to move the front display upward and downward and to tilt the front display, and a see-through panel configured to, when a low mode among display modes is applied, transmit light from a lower area of the front display to provide information to the driver and a passenger, after the front display is moved downward. The front display includes a display panel including a plurality of display areas, and when at least one of the plurality of display areas is deactivated, a dead front effect is represented to make the deactivated display area indistinguishable from a part other than the deactivated display area.

The front display may further include a black masking layer attached to a front surface of the display panel and covering a border area between the display areas in black, a dead front layer disposed on a front surface of the black masking layer and configured to represent the dead front effect, and a front glass disposed on a front surface of the dead front layer to protect the display panel.

The display modes may include a standard mode in which the front display is located at a preset position, a tilt-back mode in which the front display is moved upward and tilted in a direction away from the driver, and the low mode in which the front display is moved downward.

In the low mode, an interface on an activated screen in the plurality of display areas may be changed to match a size of a screen exposed above the see-through panel in the activated screen.

The display panel may include a separate light-emitting display in an area that does not allow a see-through display to be performed through the see-through panel among border areas between the plurality of display areas.

The plurality of display areas of the front display may include a first shy button, a first in-vehicle infotainment (IVI) display, a second IVI display, and a second shy button.

When the low mode is applied, the information provided through the see-through panel may be information corresponding to a screen displayed through each of the first shiny button, the first IVI display, the second IVI display, and the second shy button, and more simplified than information displayed through an upper part of the front display.

A touch input is applicable on the see-through panel.

The plurality of display areas may include a first display area and a second display area, and when failure of the first display area is detected, information displayed on the first display area may be displayed on the second display area.

In another aspect of the invention, a method of changing a cockpit layout according to a display mode in a mobile device includes selecting a first mode from a first mode group including a standard mode, a tilt-back mode, and a low mode, when the first mode is the low mode, moving a front display downward, providing information to a driver and a passenger through a see-through panel by transmitting light from a lower area of the front display moved downward, and changing an interface on an activated screen of the front display moved downward to match a size of a screen exposed above the see-through panel.

### BRIEF DESCRIPTION OF THE DRAWINGS

The above and other aspects, features, and advantages of certain embodiments of the invention will be more apparent from the following description taken in conjunction with the accompanying drawings, in which:
FIG. 1 is a diagram illustrating an exemplary front display including a plurality of display areas according to an embodiment of the invention;
FIG. 2 is a diagram illustrating a method of changing a cockpit layout according to a display mode in an embodiment of the invention;
FIG. 3 is a diagram illustrating components of a front display according to an embodiment of the invention;
FIG. 4 is a detailed diagram illustrating a display position in each display mode during a driving mode according to an embodiment of the invention;
FIGS. 5 to 7 are diagrams illustrating examples of changing an interface of a front display, when a standard mode is switched to a low mode according to an embodiment of the invention;
FIG. 8 is a diagram illustrating content displayed on a front display in a standard mode during a driving mode according to an embodiment of the invention;
FIG. 9 is a diagram illustrating content displayed on a front display in a low mode during a driving mode according to an embodiment of the invention; and
FIGS. 10 and 11 are diagrams illustrating content displayed on a see-through panel according to embodiments of the invention.

### DETAILED DESCRIPTION

Embodiments of the invention will be described in detail with reference to the attached drawings, so that those skilled in the art may easily implement the disclosure. However, the disclosure may be implemented in many different forms and is not limited to the embodiments described herein. In order to clearly describe the disclosure in the drawings, parts not related to the description are omitted, and similar reference numerals are assigned to similar components throughout the specification.

Throughout the specification, when a part is said to "include" a certain element, this means that it may further include other elements rather than excluding them, unless otherwise specified.

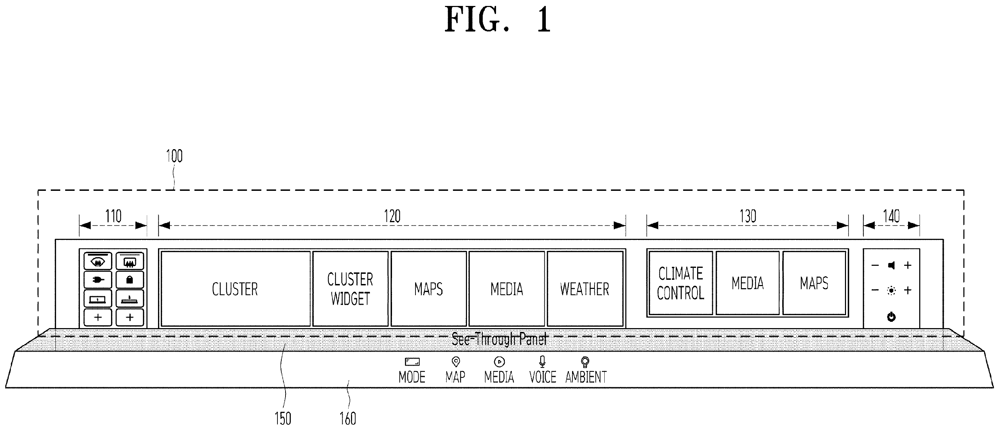

FIG. 1 is a diagram illustrating an exemplary front display including a plurality of display areas according to an embodiment of the disclosure.

It is assumed that a front display 100 illustrated in FIG. 1 is disposed in front of a driver's seat and a passenger seat in a mobile device. In other words, the front display 100 is preferably disposed across the front of the passenger seat as well as the front of the driver's seat in the mobile device.

The front display 100 may measure a specific part (e.g., eye/nose position) of the driver's face through a camera (e.g., driver status monitor (DSM) camera) and adjust its height and inclination according to the position of the part.

Additionally, the front display 100 according to the embodiment illustrated in FIG. 1 may include a plurality of display areas 110, 120, 130, and 140. While the plurality of display areas 110, 120, 130, and 140 are shown in FIG. 1 as specifically including a first shy button 110, a first in-vehicle infotainment (IVI) display 120, a second IVI display 130, and a second shy button 140, they may be configured in various other forms.

The shy buttons 110 and 140 generally refer to buttons configured to be recognized in a user's field of view, only when needed. In the example of FIG. 1, the first shy button 110 is a shy button providing a function (e.g., a driving control-related function) that the driver may use, when needed, and the second shy button 140 is a shy button providing a function (e.g., a function related to music playback) that a passenger in the passenger seat may use, when needed.

The first IVI display 120 may play a cluster related to the driver's driving, a cluster widget, a map, media, and a weather-related application, and reset an area in which an application is displayed according to the driver's (or passenger's) operation or condition settings.

The second IVI display 130 may display applications that may be controlled by the passenger, such as weather-related control, media, and a map.

In an embodiment of the disclosure, it is proposed to support a low mode to secure the driver's forward vision among display modes. During a low-mode operation, the front display 100 described above may be moved downward by a controller (not shown).

In an embodiment of the disclosure, it is further proposed to include a see-through panel 150 as illustrated in FIG. 1. As described above, the front display 100 may be configured such that when the front display 100 is moved downward by applying the low mode, light from a lower area of the front display 100 provides information to the driver and the passenger through the see-through panel 150.

It is assumed that the information provided through the see-through panel 150 corresponds to a screen displayed through each of the first shy button 110, the first IVI display 120, the second IVI display 130, and the second shy button 140. However, the information provided through the see-through panel 150 is preferably simplified information, compared to information displayed on an upper part of the front display 100. "Simplified information" may refer to information that may be implemented at a low resolution, in a small amount, or in a combination of both, compared to information displayed in the upper part of the front display 100.

As illustrated in FIG. 1, a cockpit system according to an embodiment of the disclosure may further include an operating system 160. The operating system 160 may be implemented in a projection manner, as described later.

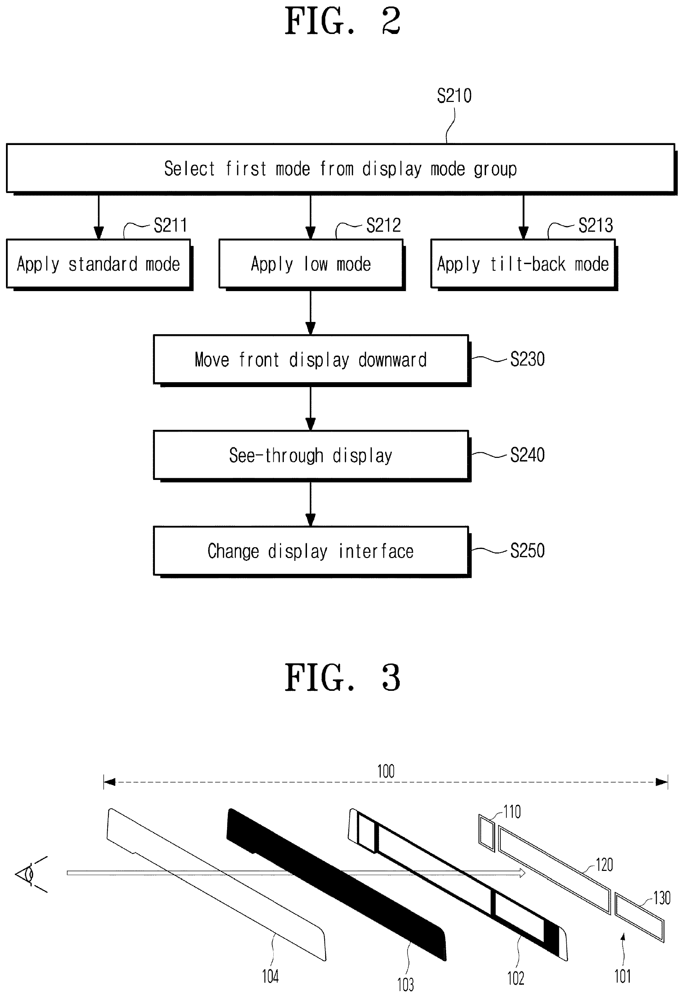

FIG. 2 is a diagram illustrating a method of changing a cockpit layout according to a display mode in an embodiment of the disclosure.

In the embodiment illustrated in FIG. 2, a first mode may be selected, which is any one of a first mode group(S210) including a standard mode(S211), a low mode(S212), and a tilt-back mode(S213). The first mode group may refer to display modes that are classified according to the driver's conditions during driving. Although the first mode group may be set to include various types of modes such as a driver's seat up mode and a driver's seat tilt-back mode as well as the standard mode, the tilt-back mode, and the low mode, the following description will be given in the context of the above three examples of standard mode, tilt-back mode, and low mode, for convenience of description.

Selecting the first mode may include measuring a specific part (e.g., eye/nose position) of the driver's face through a camera (e.g., DSM camera) and selecting the first mode according to the position of the specific part.

For example, when the position of the specific part is equal to or greater than a first reference height (e.g., 1m), which corresponds to a large driver's sitting height, the tilt-back mode may be applied to efficiently display the front display to the driver. When the position of the specific part is equal to or less than a second reference height (e.g., 70cm), which corresponds to a small driver's sitting height, the low mode may be applied to secure the driver's forward vision. Additionally, when the position of the specific part is between the first reference height and the second reference height, the standard mode may be applied to secure the forward vision and increase display efficiency depending on the driver's state.

When the first mode selected in step S210 is the low mode, it is proposed in an embodiment of the disclosure to move the front display downward (S230), and provide information to the driver and passenger through the see-through panel by transmitting light from the lower area of the front display moved downward (S240), as described above with reference to FIG. 1.

Additionally, in an embodiment of the disclosure, when the first mode selected in step S210 is the low mode, the front display may be moved downward (S230), and a display interface may be changed (S250). That is, the front display may be moved downward, allowing the lower area of the display to transmit light to provide information to the driver and the passenger through the see-through panel, and an upper area other than the see-through area still displays information, while a screen interface may be changed to match the size of a screen exposed above the see-through panel. In other words, the interface may be automatically changed to display information according to the size of the lowered screen.

The display interface change step S250 is shown in FIG. 2 as following the see-through display step S240, which should not be construed as limiting. The order may be reversed or the steps may be performed simultaneously.

FIG. 3 is a diagram illustrating components of the front display 100 according to an embodiment of the disclosure. The front display 100 may include a display panel 101, a black masking layer 102, a dead front layer 103, and a front glass 104.

The display panel 101 may include a plurality of display areas 110, 120, and 130, and provide information to the driver and the passenger and enable control of the mobile device through a plurality of displays.

The plurality of display areas 110, 120, and 130 may be individually controlled for the respective displays. The individual control enables multi-touch in which the driver and the passenger control their own displays by touching them at the same time, and enables individual adjustment of the brightness of screens, thereby increasing convenience.

Additionally, upon detecting that the first display area is failed, the front display 100 according to an embodiment of the disclosure may display information displayed on the first display area on the second display area. Traditionally, when a cluster and a control screen are configured on a single display, a fatal risk may occur when a problem such as malfunction occurs. In contrast, as the cockpit system according to an embodiment of the disclosure includes the plurality of displays, driving safety may be improved by allowing information to be displayed on another display even if a display area malfunctions.

In other words, safety and convenience may be improved by configuring a plurality of displays instead of a single display. Moreover, for an electric vehicle, only a required display may be activated to reduce the power consumption of the displays and secure a driving distance as much as the reduced power consumption.

The black masking layer 102 may be provided on the front surface of the display panel 101 and shaped like a frame configured to cover border areas between the plurality of display areas in black. When the display areas 110, 120, and 130 are deactivated, the screen appears black, and thus the black masking layer 102 serving as a bezel of the display areas is preferably processed in real black to reduce contrast.

The dead front layer 103 may be disposed on the front surface of the black masking layer and enable the front display to implement a dead front effect (DFE). The DFE means that when a display area is deactivated, the deactivated display area is indistinguishable from a part other than the display area. In other words, finish is performed such that when a screen is turned off, the presence of the display is not perceivable as if only an exterior material is visible, and the resulting differentiation of an interior design may increase the aesthetic effect.

The aesthetic effect may further be enhanced by representing a graphical user interface (GUI) on the screen in real black. When attention is required, only an information area that needs to attract attention may be displayed, while the DFE is implemented in the other areas, thereby eliminating factors of carelessness and improving driving safety.

For finer representation, a gradation effect may be applied to both end edges of the dead front layer 103 according to an embodiment of the disclosure.

The front glass 104 may be disposed on the front surface of the dead front layer and serve as an outermost exterior material to protect the display panel.

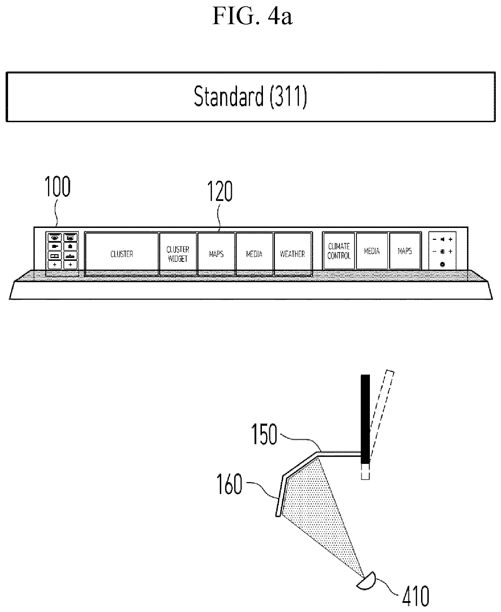

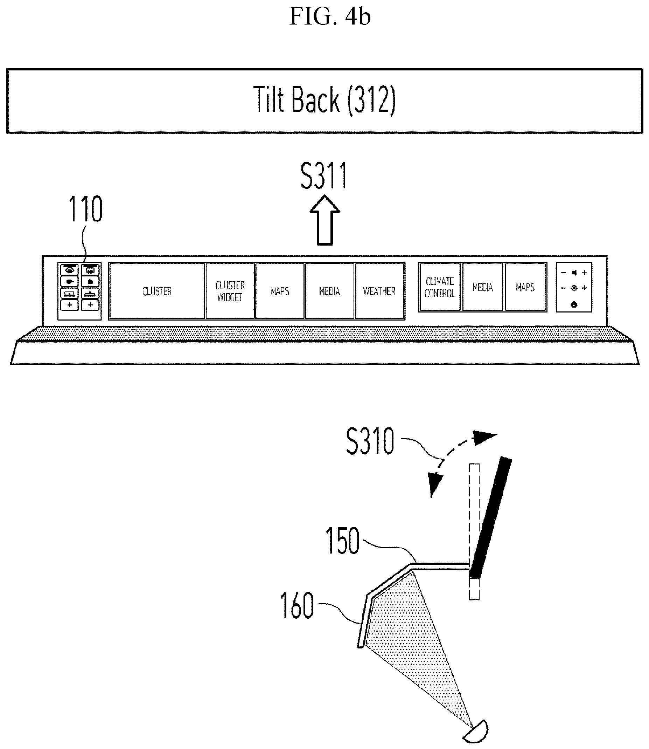

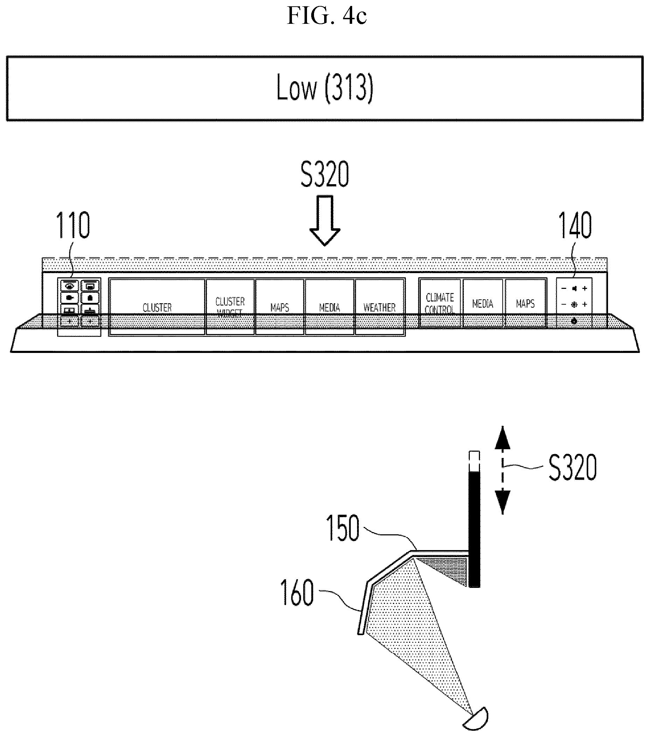

FIG. 4 is a detailed diagram illustrating a display position in each display mode according to an embodiment of the disclosure.

First, in the embodiment illustrated in FIG. 4, a display position for a standard mode 311 is preferably set to a height at which the bottom line of a display active area of the fist IVI display on the front display is not covered by the see-through panel 150.

Secondly, in the embodiment illustrated in FIG. 4, in a tilt-back mode 312, the height of the driver's eyes/nose may be measured as described above, and the front display 100 may be adjusted to be tilted back accordingly to increase display efficiency for the driver (S310). Additionally, in a preferred embodiment of the disclosure, it may be configured that the tilt-back degree of the front display 100 is finely adjusted through the first shy button 110.

Lastly, in the embodiment illustrated in FIG. 4, in a low mode 313, the driver's eye/nose height may be measured and the front display 100 may be moved downward to secure a forward vision (S320), as described above. In this case, as described above, it may be configured to provide simplified information by light emitted from the bottom of the front display 100 through the see-through panel 150.

In an embodiment of the disclosure, in the low mode 313, there are areas in lower parts of the shy buttons 110 and 140, which are covered due to the downward movement of the display, and in view of the nature of the shy buttons 110 and 140, it may not be efficient to use light from the bottom of the shy buttons 110 and 140 to provide information through the see-through panel 150. Accordingly, the shy buttons 110 and 140 may be configured such that the arrangement of buttons is changed to maintain existing functions of the shy buttons in areas that are not covered in the low mode 313.

FIG. 4 illustrates an embodiment in which the operating system 160 is implemented in a projection manner using an internal projector 410. To implement a display-type operating system 160, a light-emitting display such as a light emitting diode (LED) display may be used. However, there are many curves/curved surfaces in the interior space of the mobile device, specifically a vehicle, and the light-emitting display is difficult to implement in consideration of the interior characteristics.

Therefore, in an embodiment of the disclosure, the operating system 160 may be configured in a projection manner using the internal projector 410 at the front of the mobile device. As illustrated in FIG. 4, the operating system 160 may be advantageously implemented freely even in a space with various curves/curved surfaces.

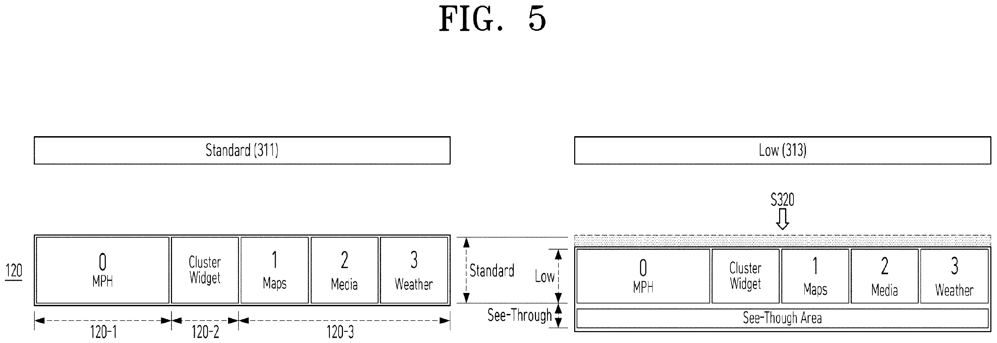

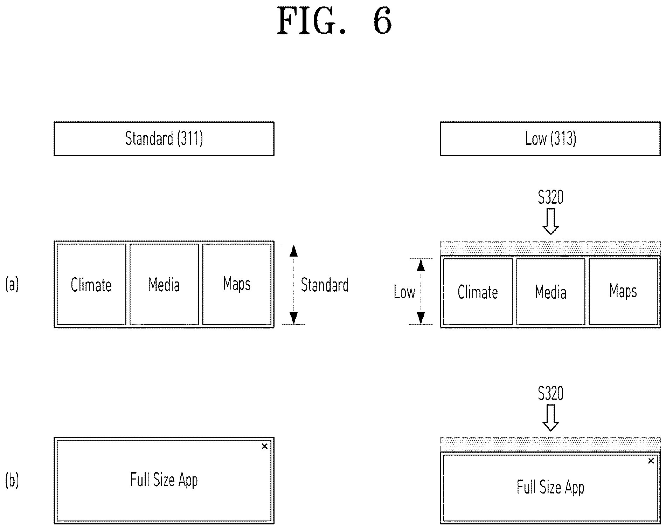

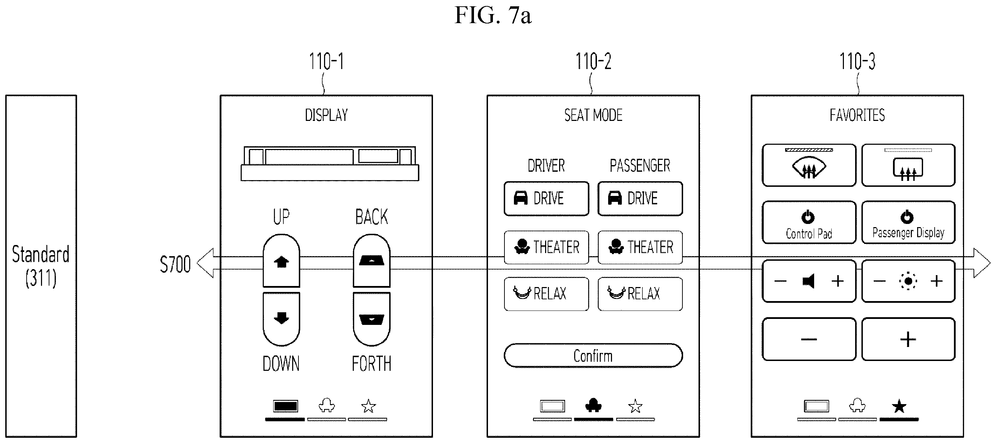

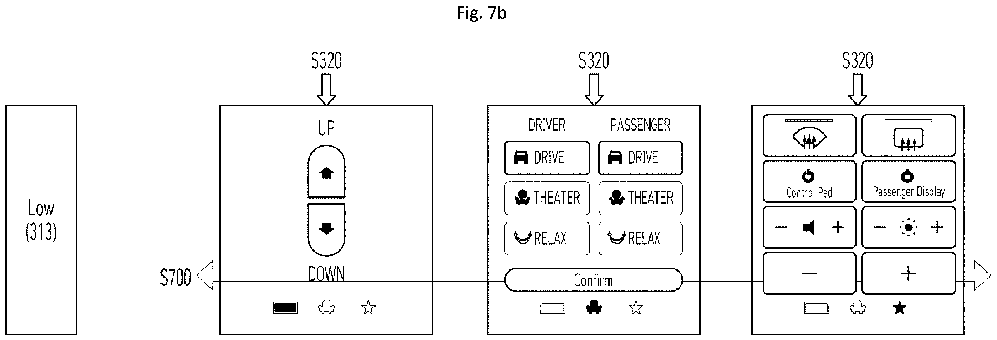

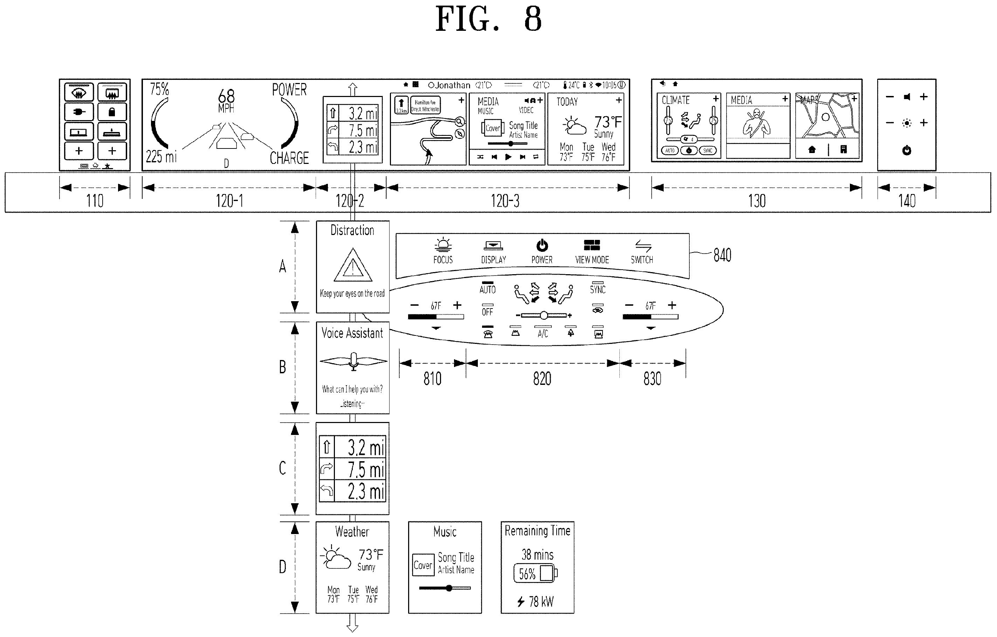

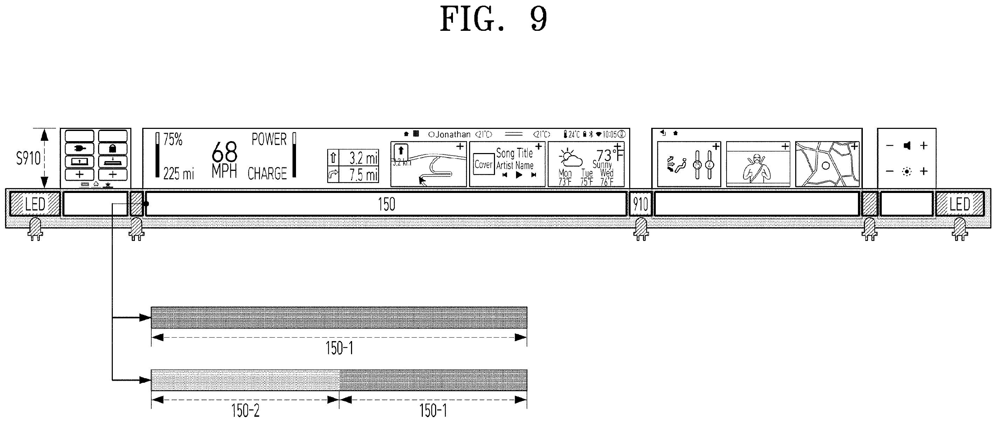

FIGS. 5 to 7 are diagrams illustrating an interface change in a low mode of a front display including a plurality of display areas according to an embodiment of the disclosure. FIG. 5 is a diagram illustrating an example of changing an interface on a screen of the first IVI display 120. FIG. 6 is a diagram illustrating an example of changing an interface on a screen of the second IVI display 130. FIG. 7 is a diagram illustrating an example of changing an interface on a screen of the first shy button 110. Although a more specific embodiment is illustrated in FIG. 8 for the standard mode and in FIG. 9 for low mode, FIGS. 5 to 7 will be described first, for convenience of description of each configuration.

In the embodiment of FIG. 5, the first IVI display 120 is displayed separately into a cluster 120-1 displaying a vehicle speed, a cluster widget 120-2, and an IVI 120-3, by way of example. The IVI may provide an IVI display for the driver. While FIG. 5 illustrates an example of providing a map, media, and weather information, this is only an exemplary configuration, to which the disclosure is not limited.

First, in the embodiment illustrated in FIG. 5, because the display position is preferably set to a height at which the bottom line of the display active area of the first IVI display on the front display 100 is not covered by the see-through panel 150 in the standard mode 311, as described above, an interface on the first IVI display 120 may be configured in a layout using the entire display screen.

Next, in the embodiment illustrated in FIG. 5, the front display may be moved downward in the low mode 313 to secure a forward vision (S320), as described above. In this case, the bottom of the screen on the first IVI display 120 is covered by the see-through panel by as much as the length of the downward movement. An area covered by the see-through panel may be configured to provide simplified information by light emitted from the bottom of the display through the see-through panel 150, as described above.

A part which is exposed above without being covered by the see-through panel may continue to provide information to the driver by applying an interface changed to suit the low mode. Herein, the size of the screen exposed above the see-through panel may be detected and calculated, and the interface may be automatically changed to match the size. As described later, since the user may finely adjust the height of the display using a button, the display screen may be reconfigured to match the height to which the downward movement is made. Changing the interface may include simply contracting the screen or changing the position and configuration of information provided on the display.

In the embodiment of FIG. 6, the second IVI display 130 is displayed, by way of example. As illustrated in FIG. 6(a), the second IVI display 130 may display applications controllable by the passenger, such as weather-related control, media, and maps. Alternatively, a full-screen application available to the driver and the passenger may be displayed, as illustrated in FIG. 6(b). In this case, maps, media, and weather information may be provided. However, this is only an exemplary configuration, to which the disclosure is not limited.

First, in the embodiment illustrated in FIG. 6, since the bottom line of a display active area is preferably set to a height at which it is not covered by the see-through panel in the standard mode 311, an interface on the second IVI display 130 may be configured in a layout using the entire screen.

Next, in the embodiment illustrated in FIG. 6, the front display may be moved downward in the low mode 313 to secure a forward vision (S320), as described above. In this case, the bottom of the screen on the second IVI display 120 is covered by the see-through panel or a housing by as much as the length of the downward movement. An area covered by the see-through panel may be configured to provide simplified information by light emitted from the bottom of the display through the see-through panel 150, as described above. Alternatively, content may not be configured in the covered area.

A part which is exposed above without being covered by the see-through panel or the housing may continue to provide information to the driver by applying an interface changed to suit the low mode. Herein, the size of the screen exposed above the see-through panel may be detected and calculated, and the interface may be automatically changed to match the size. As described later, since the user may finely adjust the height of the display using a button, the display screen may be reconfigured to match the height to which the downward movement is made. Changing the interface may include simply contracting the screen or changing the position and configuration of information provided on the display.

In the embodiment of FIG. 7, the first shiny button 110 is displayed in the standard mode and the low mode, by way of example. The first shy button 110 may provide functions (e.g., driving control-related functions) that the driver may use when needed. Additionally, the first shy button 110 may be configured with an application with multiple pages based on the first shy button 110 being a display.

FIG. 7 illustrates an example in which the first shy button 110 includes a front display control button 110-1 on page 1, a driver and passenger seat mode setting button 110-2 on page 2, and a user-set favorite button 110-3 on page 3. However, this is an exemplary configuration, to which the disclosure is not limited. Each page may be turned by a flicking or slide touch input (S700), and the order and configuration of the pages may be set by the user.

First, in the embodiment illustrated in FIG. 7, since the bottom line of a display active area is preferably set to a height at which it is not covered by the see-through panel in the standard mode 311, an interface of the first shy button 110 may be configured in a layout using the entire screen. In this case, more specific and more information may be displayed.

Next, in the embodiment illustrated in FIG. 7, the front display may be moved downward in the low mode 313 to secure a forward vision (S320), as described above. In this case, the bottom of the screen of the first shy button 110 is covered by the see-through panel by as much as the length of the downward movement. An area covered by the see-through panel may be configured to provide simplified information by light emitted from the bottom of the display through the see-through panel 150, as described above. Alternatively, content may not be configured in the covered area, as illustrated.

In the low mode 313, there is an area in the lower part of the shy button 110, which is covered due to the downward movement of the display, and in view of the nature of the shy button 110, it may not be efficient to use light from the bottom of the shy button 110 to provide information through the see-through panel 150. Accordingly, the shy button 110 may be configured such that the arrangement of buttons is changed to maintain an existing function of the shy button in an area that is not covered in the low mode 313.

A part which is exposed above without being covered by the see-through panel may continue to provide information to the driver by applying an interface changed to suit the low mode. Herein, the size of the screen exposed above the see-through panel may be detected and calculated, and the interface may be automatically changed to match the size. As described later, since the user may finely adjust the height of the display using a button, the display screen may be reconfigured to match the height to which the downward movement is made. Changing the interface may include simply contracting the screen or changing the position and configuration of information provided on the display.

FIG. 8 is a diagram illustrating content displayed on a front display in a standard mode during a driving mode according to an embodiment of the disclosure.

In the embodiment of FIG. 8, the front display is also shown as including the first shiny button 110, the first IVI display 120, the second IVI display 130, and the second shiny button 140, as in the example of FIG. 1. Among them, the first IVI display 120 is displayed separately into the cluster 120-1, the cluster widget 120-2, and the IVI 120-3, by way of example.

Specifically, the cluster 120-1 may display a cluster screen related to driving information, and FIG. 8 illustrates an example of displaying driving navigation information, a vehicle speed, a driving distance, and a battery state of an electric vehicle.

The cluster widget 120-2 displays information in the form of a widget, and FIG. 8 illustrates an example in which warning information A, virtual personal assistant (VPA) B, turn by turn (TBT) C, and an information-type widget D are selected with first to fourth priorities, respectively. However, this is an exemplary configuration, to which the disclosure is not limited.

Additionally, the IVI 120-3 may provide an IVI display for the driver, unlike the second IVI display 130 for the passenger seat. Although FIG. 8 illustrates an example of providing maps, media, and weather information, this is only an exemplary configuration, to which the disclosure is not limited.

In the embodiment illustrated in FIG. 8, the operating system is divided into a driver operating system 810, an HVAC operator 820, and a passenger operating system 830. In addition, an upper part of the operating system includes an operation button unit 840 displayed in the form of a shortcut, and the position of the shortcut is preferably exchanged with the position of an animation form in a lower part.

FIG. 9 is a diagram illustrating content displayed on a front display in a low mode during a driving mode according to an embodiment of the disclosure.

In the embodiment of FIG. 9, it is also assumed that a plurality of display areas of the front display are the same as in the embodiment of FIG. 8. However, it is configured that as the low mode is applied, the front display is moved downward (S910), and light emitted from the lower area of the front display provides additional information through the see-through panel 150.

Preferably, a display through the see-through panel 150 displays simplified information, compared to the upper area of the front display, and a background color 150-1 is preferably a subdued color that may provide comfort to the driver/passenger. However, when information provided through the see-through panel 150 delivers a warning message to the driver/passenger, the see-through display is preferably performed by applying an intense color 150-2 that may provide alertness.

In the embodiment of FIG. 9, there are areas in the lower parts of the shy buttons 110 and 140 in the low mode, which are covered due to the downward movement of the display, and in view of the nature of the shy buttons 110 and 140, it may not be efficient to use light from the bottoms of the shy buttons 110 and 140 to provide information through the see-through panel 150. Accordingly, it is proposed that the shy buttons 110 and 140 are configured such that the arrangement of buttons is changed to maintain existing functions of the shy buttons in areas that are not covered in the low mode 313, unlike the IVI displays 120 and 130 (S910).

Additionally, the embodiment of FIG. 9 proposes that a separate light-emitting display 910 (e.g., an LED display) is disposed in an area in which a see-through display through the see-through panel 150 may not be performed, in a border area between a plurality of display areas. This light-emitting display 910 may be configured to provide additional information, and as described later, serve as an indoor mood light together with the see-through display area 150.

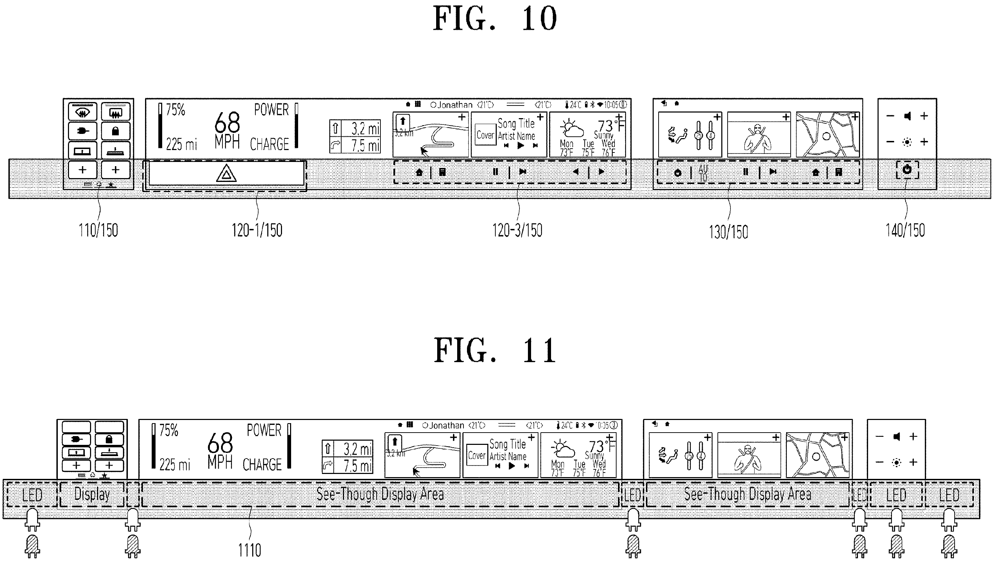

FIGS. 10 and 11 are diagrams illustrating content displayed through a see-through panel according to embodiments of the disclosure.

As described above, when the low mode is applied, the front display may move downward with the plurality of display areas as a unit, and light from the lower area of the front display may display simplified information through the see-through panel 150, compared to information displayed in the upper area of the front display.

As in the embodiment of FIG. 10, the information displayed through the see-through panel may include information corresponding to each of the plurality of display areas in the upper part of the front display. That is, when the plurality of display areas of the front display include the first shy button 110, the first IVI display 120, the second IVI display 130, and the second shy button 140, and among them, the first IVI display 120 is divided into the cluster 120-1, the cluster widget 120-2, and the IVI 120-3 as described above, information corresponding to each of these areas may be displayed through the see-through panel 150.

In the embodiment of FIG. 10, when driving information is displayed through the cluster 120-1, information displayed through the corresponding see-through panel 150 may be a driving-related warning message 120-1/150, which is simplified information corresponding to the driving information. In addition, when a specific widget is performed through the IVI 120-3 and/or the second IVI display 130, a shortcut function button 120-3/150 and/or 130/150 of the specific widget may be displayed through a corresponding area of the see-through panel 150.

The shy buttons 110 and 140 may be configured to maintain display information of the shy buttons 110 and 140 in view of the nature of the shy buttons, as indicated by reference numerals 110/150 and/or 140/150. That is, unlike the IVI displays, the shy buttons 110 and 140 often display simplified information, and in this case, a lower area of the same content may also be displayed through the see-through panel 150.

In some cases, however, function buttons corresponding to the upper parts of the shy buttons 110 and 140 may be displayed, in further simplified buttons, compared to the function buttons corresponding to the upper parts. For example, it may be configured that when icons of buttons displayed in the upper parts of the shy buttons 110 and 140 require a high resolution, simplified forms of the icons are displayed through the see-through panel 150.

The see-through panel may include a touch input-enabled configuration. The see-through panel may be configured as a touch screen. As described above, when a simplified icon is displayed through the see-through panel, the user may execute a corresponding function by touching the icon on the see-through panel.

In the embodiment illustrated in FIG. 11, the whole see-through panel 150 may be configured to perform the function of a mood lamp 1110 for interior decoration, instead of providing specific information. In this case, as described above with reference to FIG. 9, an uninterrupted mood lamp 1110 may be configured using the light-emitting display 910 at each of borders between the areas as well as the see-through panel 150. Even in an embodiment in which the see-through panel 150 and the light-emitting display 910 are used as the mood lamp 1110, driving-related warning information may be provided through a color of the mood lamp 1110.

According to the embodiments of the disclosure described above, a method of changing a cockpit layout according to a display mode and a cockpit system using the same may be efficiently configured.

Specifically, in an embodiment of the disclosure, as a plurality of display areas are provided instead of a single display providing multiple pieces of information, individual control is possible, thereby increasing convenience. When one display malfunctions, information may be displayed on another display, thereby significantly increasing driving safety.

Further, aesthetics may be enhanced by providing a display panel that realizes the DFE.

Further, in an embodiment of the disclosure, the forward vision of a driver may be easily secured through a low mode even during a driving mode, and information may also be provided to the driver and a passenger by transmitting light from a lower area of a front display through a see-through display even in the low mode.

Further, simplified information and a touch function may be provided through a see-through display, thereby increasing user convenience.

## Claims

1. A cockpit system with a layout changed according to a display mode in a mobile device, comprising:
a front display (100) disposed in front of a driver's seat and a passenger seat of the mobile device;
a controller configured to move the front display (100) upward and downward and to tilt the front display (100); and
a see-through panel (150) configured to, when a low mode (313) among display modes is applied, in which the lower area of the screen (100) is covered by the see-through panel (150) by as much as the length of the downward movement, transmit light from a lower area of the front display (100) to provide information to the driver and a passenger, after the front display (100) is moved downward,
wherein the front display (100) includes a display panel (101) including a plurality of display areas (110, 120, 130), wherein
when at least one of the plurality of display areas (110, 120, 130) is deactivated, a dead front effect, DFE, is represented to make the deactivated display area indistinguishable from a part other than the deactivated display area.

2. The cockpit system of claim 1, wherein the front display (100) further includes:
a black masking layer (102) attached to a front surface of the display panel (101) and covering a border area between the display areas (110, 120, 130) in black;
a dead front layer (103) disposed on a front surface of the black masking layer (102) and configured to represent the dead front effect; and
a front glass (104) disposed on a front surface of the dead front layer (103) to protect the display panel (101).

3. The cockpit system of claim 1, or 2, wherein the display modes include:
a standard mode in which the front display (100) is located at a preset position;
a tilt-back mode in which the front display (100) is moved upward and tilted in a direction away from the driver; and
the low mode (313) in which the front display (100) is moved downward.

4. The cockpit system of claim 1, 2, or 3, wherein in the low mode (313), an interface on an activated screen in the plurality of display areas (110, 120, 130) is changed to match a size of a screen exposed above the see-through panel (150) in the activated screen.

5. The cockpit system of any one of claims 1 to 4, wherein the display panel (101) includes a separate light-emitting display (910) in an area that does not allow a see-through display to be performed through the see-through panel (150) among border areas between the plurality of display areas (110, 120, 130).

6. The cockpit system of any one of claims 1 to 5, wherein the plurality of display areas (110, 120, 130) of the front display (100) includes a first shy button (110), a first in-vehicle infotainment, IVI, display (120), a second IVI display (130), and a second shy button (140).

7. The cockpit system of claim 6, wherein when the low mode (313) is applied, the information provided through the see-through panel (150) is information corresponding to a screen displayed through each of the first shy button(110), the first IVI display (120), the second IVI display (130), and the second shy button (140), and more simplified than information displayed through an upper part of the front display (100).

8. The cockpit system of any one of claims 1 to 7, wherein a touch input is applicable on the see-through panel (150).

9. The cockpit system of any one of claims 1 to 8, wherein the plurality of display areas (110, 120, 130) include a first display area and a second display area, and
wherein when failure of the first display area is detected, information displayed on the first display area is displayed on the second display area.

10. A method of changing a cockpit layout according to a display mode in a mobile device, the method comprising:
selecting a first mode from a first mode group including a standard mode, a tilt-back mode, and a low mode (313);
when the first mode is the low mode (313), moving a front display (100) downward;
wherein the front display (100) includes a display panel (101) including a plurality of display areas (110, 120, 130);
providing information to a driver and a passenger through a see-through panel (150) by transmitting light from a lower area of the front display (100) moved downward, such that the lower area of the screen (100) is covered by the see-through panel (150) by as much as the length of the downward movement, and
changing an interface on an activated screen of the front display (100) moved downward to match a size of a screen exposed above the see-through panel (150);
wherein
when at least one of the plurality of display areas (110, 120, 130) is deactivated, a dead front effect, DFE, is represented to make the deactivated display area indistinguishable from a part other than the deactivated display area.

## Patentansprüche

1. Cockpitsystem mit einem Layout, das gemäß einem Anzeigemodus in einer mobilen Vorrichtung geändert wird, aufweisend:
eine vordere Anzeige (100), die vor einem Fahrersitz und einem Beifahrersitz der mobilen Vorrichtung angeordnet ist;
eine Steuerung, die konfiguriert ist, um die vordere Anzeige (100) aufwärts und abwärts zu bewegen und die vordere Anzeige (100) zu neigen; und
ein durchsichtiges Panel (150), das konfiguriert ist, um, wenn ein niedriger Modus (313) unter Anzeigemodi angewendet wird, in dem der untere Bereich des Bildschirms (100) durch das durchsichtige Panel (150) um ebenso viel wie die Länge der Abwärtsbewegung abgedeckt wird,
Licht von einem unteren Bereich der vorderen Anzeige (100) zu übertragen, um dem Fahrer und einem Beifahrer Informationen bereitzustellen, nachdem die vordere Anzeige (100) nach unten bewegt wurde,
wobei die vordere Anzeige (100) ein Anzeigepanel (101) einschließt, das mehrere Anzeigebereiche (110, 120, 130) einschließt, wobei
wenn mindestens einer der mehreren Anzeigebereiche (110, 120, 130) deaktiviert ist, ein Dead-Front-Effekt (DFE) dargestellt wird, um den deaktivierten Anzeigebereich von einem anderen Teil als dem deaktivierten Anzeigebereich ununterscheidbar zu machen.

2. Cockpitsystem nach Anspruch 1, wobei die vordere Anzeige (100) ferner einschließt:
eine schwarze Maskierungsschicht (102), die an einer vorderen Oberfläche des Anzeigepanels (101) angebracht ist und einen Randbereich zwischen den Anzeigebereichen (110, 120, 130) schwarz abdeckt;
eine Dead-Front-Schicht (103), die auf einer vorderen Oberfläche der schwarzen Maskierungsschicht (102) angeordnet und konfiguriert ist, um den Dead-Front-Effekt darzustellen; und
ein Frontglas (104), das auf einer vorderen Oberfläche der Dead-Front-Schicht (103) angeordnet ist, um das Anzeigepanel (101) zu schützen.

3. Cockpitsystem nach Anspruch 1 oder 2, wobei die Anzeigemodi einschließen:
einen Standardmodus, in dem sich die vordere Anzeige (100) an einer voreingestellten Position befindet;
einen Rückneigemodus, in dem die vordere Anzeige (100) nach oben bewegt und in eine von dem Fahrer abgewandte Richtung geneigt wird; und
den niedrigen Modus (313), in dem die vordere Anzeige (100) nach unten bewegt wird.

4. Cockpitsystem nach Anspruch 1, 2 oder 3, wobei in dem niedrigen Modus (313) eine Schnittstelle auf einem aktivierten Bildschirm in den mehreren Anzeigebereichen (110, 120, 130) geändert wird, um mit einer Größe eines Bildschirms übereinzustimmen, der über dem durchsichtigen Panel (150) in dem aktivierten Bildschirm freigelegt ist.

5. Cockpitsystem nach einem der Ansprüche 1 bis 4, wobei das Anzeigepanel (101) eine separate lichtemittierende Anzeige (910) in einem Bereich unter Randbereichen zwischen den mehreren Anzeigebereichen (110, 120, 130) einschließt, der es nicht zulässt, dass eine durchsichtige Anzeige durch das durchsichtige Panel (150) durchgeführt wird.

6. Cockpitsystem nach einem der Ansprüche 1 bis 5, wobei die mehreren Anzeigebereiche (110, 120, 130) der vorderen Anzeige (100) einen ersten Shy-Button (110), eine erste fahrzeuginterne Infotainment-Anzeige (IVI-Anzeige) (120), eine zweite IVI-Anzeige (130) und einen zweiten Shy-Button (140) einschließt.

7. Cockpitsystem nach Anspruch 6, wobei, wenn der niedrige Modus (313) angewendet wird, die durch das durchsichtige Panel (150) bereitgestellte Information eine Information ist, die einem Bildschirm entspricht, der durch jedes von dem ersten Shy-Button (110), der ersten IVI-Anzeige (120), der zweiten IVI-Anzeige (130) und dem zweiten Shy-Button (140) angezeigt wird, und vereinfachter als Informationen ist, die durch ein Oberteil der vorderen Anzeige (100) angezeigt werden.

8. Cockpitsystem nach einem der Ansprüche 1 bis 7, wobei eine Berührungseingabe auf dem durchsichtigen Panel (150) anwendbar ist.

9. Cockpitsystem nach einem der Ansprüche 1 bis 8, wobei die mehreren Anzeigebereiche (110, 120, 130) einen ersten Anzeigebereich und einen zweiten Anzeigebereich einschließen, und
wobei, wenn ein Ausfall des ersten Anzeigebereichs erfasst wird, auf dem ersten Anzeigebereich angezeigte Informationen auf dem zweiten Anzeigebereich angezeigt werden.

10. Verfahren zum Ändern eines Cockpit-Layouts gemäß einem Anzeigemodus in einer mobilen Vorrichtung, das Verfahren aufweisend:
Auswählen eines ersten Modus aus einer ersten Modusgruppe, die einen Standardmodus, einen Rückneigemodus und einen niedrigen Modus (313) einschließt;
wenn der erste Modus der niedrige Modus (313) ist, Bewegen einer vorderen Anzeige (100) nach unten;
wobei die vordere Anzeige (100) ein Anzeigepanel (101) einschließt, das mehrere Anzeigebereiche (110, 120, 130) einschließt;
Bereitstellen von Informationen für einen Fahrer und einen Beifahrer durch ein durchsichtiges Panel (150) durch Übertragen von Licht aus einem unteren Bereich der nach unten bewegten vorderen Anzeige (100), derart, dass der untere Bereich des Bildschirms (100) durch das durchsichtige Panel (150) um ebenso viel wie die Länge der Bewegung nach unten verdeckt wird, und
Ändern einer Schnittstelle auf einem aktivierten Bildschirm der nach unten bewegten vorderen Anzeige (100), um mit einer Größe eines über dem durchsichtigen Panel (150) freiliegenden Bildschirms übereinzustimmen;
wobei
wenn mindestens einer der mehreren Anzeigebereiche (110, 120, 130) deaktiviert ist, ein Dead-Front-Effekt (DFE) dargestellt wird, um den deaktivierten Anzeigebereich von einem anderen Teil als dem deaktivierten Anzeigebereich ununterscheidbar zu machen.

## Revendications

1. Système de poste de pilotage avec un agencement modifié selon un mode d'affichage dans un dispositif mobile, comprenant :
une unité d'affichage avant (100) disposée devant un siège conducteur et un siège passager du dispositif mobile ;
un dispositif de commande configuré pour déplacer l'unité d'affichage avant (100) vers le haut et vers le bas et pour incliner l'unité d'affichage avant (100) ; et
un panneau transparent (150) configuré pour, lorsqu'un mode bas (313) parmi des modes d'affichage est appliqué, dans lequel la zone inférieure de l'unité d'affichage (100) est couverte par le panneau transparent (150) d'une longueur correspondant au mouvement vers le bas,
transmettre de la lumière à partir d'une zone inférieure de l'unité d'affichage avant (100) pour fournir des informations au conducteur et à un passager, après que l'unité d'affichage avant (100) a été déplacée vers le bas,
dans lequel l'unité d'affichage avant (100) comporte un panneau d'affichage (101) comportant une pluralité de zones d'affichage (110, 120, 130), dans lequel
lorsqu'au moins l'une parmi la pluralité de zones d'affichage (110, 120, 130) est désactivée, un effet dead front, DFE, est représenté pour rendre la zone d'affichage désactivée indiscernable d'une partie autre que la zone d'affichage désactivée.

2. Système de poste de pilotage selon la revendication 1, dans lequel l'unité d'affichage avant (100) comporte en outre :
une couche de masquage noire (102) fixée à une surface avant du panneau d'affichage (101) et couvrant une zone limite entre les zones d'affichage (110, 120, 130) en noir ;
une couche dead front (103) disposée sur une surface avant de la couche de masquage noire (102) et conçue pour représenter l'effet dead front ; et
une vitre avant (104) disposée sur une surface avant de la couche dead front (103) pour protéger le panneau d'affichage (101).

3. Système de poste de pilotage selon la revendication 1 ou 2, dans lequel les modes d'affichage comportent :
un mode standard dans lequel l'unité d'affichage avant (100) est située au niveau d'une position prédéfinie ;
un mode d'inclinaison vers l'arrière dans lequel l'unité d'affichage avant (100) est déplacée vers le haut et inclinée dans une direction opposée au conducteur ; et
le mode bas (313) dans lequel l'unité d'affichage avant (100) est déplacée vers le bas.

4. Système de poste de pilotage selon la revendication 1, 2 ou 3, dans lequel, en mode bas (313), une interface sur un écran activé dans la pluralité de zones d'affichage (110, 120, 130) est modifiée pour correspondre à une taille d'un écran exposé au-dessus du panneau transparent (150) dans l'écran activé.

5. Système de poste de pilotage selon l'une quelconque des revendications 1 à 4, dans lequel le panneau d'affichage (101) comporte une unité d'affichage électroluminescente distincte (910) dans une zone qui ne permet pas à un affichage transparent d'être réalisé à travers le panneau transparent (150) parmi des zones limites entre la pluralité de zones d'affichage (110, 120, 130).

6. Système de poste de pilotage selon l'une quelconque des revendications 1 à 5, dans lequel la pluralité de zones d'affichage (110, 120, 130) de l'unité d'affichage avant (100) comporte un premier bouton discret (110), une première unité d'affichage d'infodivertissement embarquée, IVI (120), une seconde unité d'affichage IVI (130) et un second bouton discret (140).

7. Système de poste de pilotage selon la revendication 6, dans lequel, lorsque le mode bas (313) est appliqué, les informations fournies par le biais du panneau transparent (150) sont des informations correspondant à un écran affiché par le biais de chacun parmi le premier bouton discret (110), la première unité d'affichage IVI (120), la seconde unité d'affichage IVI (130) et le second bouton discret (140), et plus simplifiées que les informations affichées par le biais d'une partie supérieure de l'unité d'affichage avant (100).

8. Système de poste de pilotage selon l'une quelconque des revendications 1 à 7, dans lequel une entrée tactile est applicable sur le panneau transparent (150).

9. Système de poste de pilotage selon l'une quelconque des revendications 1 à 8, dans lequel la pluralité de zones d'affichage (110, 120, 130) comporte une première zone d'affichage et une seconde zone d'affichage, et
dans lequel, lorsqu'une défaillance de la première zone d'affichage est détectée, des informations affichées sur la première zone d'affichage sont affichées sur la seconde zone d'affichage.

10. Procédé de modification d'agencement de poste de pilotage selon un mode d'affichage dans un dispositif mobile, le procédé comprenant :
la sélection d'un premier mode parmi un premier groupe de modes comportant un mode standard, un mode d'inclinaison vers l'arrière et un mode bas (313) ;
lorsque le premier mode est le mode bas (313), le déplacement d'une unité d'affichage avant (100) vers le bas ;
dans lequel l'unité d'affichage avant (100) comporte un panneau d'affichage (101) comportant une pluralité de zones d'affichage (110, 120, 130) ;
la fourniture d'informations à un conducteur et à un passager par le biais d'un panneau transparent (150) en transmettant de la lumière à partir d'une zone inférieure de l'unité d'affichage avant (100) déplacée vers le bas, de telle sorte que la zone inférieure de l'écran (100) est couverte par le panneau transparent (150) d'une longueur correspondant au mouvement vers le bas, et
la modification d'une interface sur un écran activé de l'unité d'affichage avant (100) déplacée vers le bas pour correspondre à une taille d'un écran exposé au-dessus du panneau transparent (150) ;
dans lequel
lorsqu'au moins l'une parmi la pluralité de zones d'affichage (110, 120, 130) est désactivée, un effet dead front, DFE, est représenté pour rendre la zone d'affichage désactivée indiscernable d'une partie autre que la zone d'affichage désactivée.
